# EUROPEAN PATENT APPLICATION

(11) **EP 4 790 808 A1**
(43) Date of publication of application: **12.08.2026**
(21) Application number: 25755222.4
(22) Date of filing: 13.02.2025
(51) Int. Cl.: H01M 50/24, H01M 50/282, H01M 50/273, H01M 50/342, H01M 50/249

(54) **BATTERY PACK AND DEVICE INCLUDING SAME**

(30) Priority: 15.02.2024 KR 20240021603
(71) Applicant: LG Energy Solution, Ltd., Seoul 07335 (KR)
(72) Inventor: PARK, Jin Yong, Daejeon 34122 (KR); KIM, Seung Joon, Daejeon 34122 (KR); RO, Yong Hwan, Daejeon 34122 (KR); CHI, Ho June, Daejeon 34122 (KR)
(74) Representative: BCKIP Part mbB
(86) International application number: PCT/KR2025/002106
(87) International publication number: WO 2025/174068

(57) **Abstract**

A battery pack according to certain aspects of the present disclosure comprises: a plurality of battery cells; a pack frame in which an upper part is opened, and the battery cells are mounted or the battery cells are mounted while being housed in a module frame; and a pack cover that covers the pack frame, wherein the pack cover includes a first plate and a second plate located on an upper part of the first plate, and wherein an insulating coating is formed on at least a part of a surface of the first plate.

## Description

### [TECHNICAL FIELD]

### Cross-Reference to Related Application(s)

This application claims priority to and the benefit of Korean Patent Application no. KR10-2024-0021603, filed on February 15, 2024, with the Korean Intellectual Property Office, the entire contents of which are incorporated herein by reference.

The present disclosure relates to a battery pack and a device including the same, and more particularly, to a battery pack capable of preventing external ignition and a device including the same.

### [BACKGROUND ART]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickel-hydrogen batteries, nickel-zinc batteries, and lithium secondary batteries. Of these batteries, lithium secondary batteries are emerging as the most popular, as they do not suffer from the memory effect as compared to nickel-based secondary batteries, and therefore, are freely charged and discharged, and have low self-discharge rates and high energy density.

Such a lithium secondary battery mainly uses a lithium-based oxide and a carbon material as a positive electrode active material and a negative electrode active material, respectively. The lithium secondary battery includes an electrode assembly in which a positive electrode plate and a negative electrode plate, each being coated with the positive electrode active material and the negative electrode active material, are disposed with a separator being interposed between them, and a battery case that hermetically seals and houses the electrode assembly together with an electrolyte solution.

In general, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

In case of secondary batteries used for small-size devices, two or three battery cells are disposed, and in case of secondary batteries used for medium- and large-size vehicle devices such as automobiles, a battery module may be used, which includes multiple battery cells electrically connected to each other. In the battery module, the multiple battery cells are connected in series or parallel to form a battery cell stack, which improves the capacity and the power. One or more battery modules may be mounted together with various control and protection systems such as a battery management system (BMS), a battery disconnect unit (BDU), and a cooling system to form a battery pack.

A battery pack may include a battery module as a subordinate concept thereof, and the battery module may include a battery cell as a subordinate concept thereof. In addition, the number of battery cells included in the battery module or the number of battery modules included in the battery pack may be variously determined according to the output or capacity of the battery pack required for an electric vehicle.

However, safety is one of the most important issues in such a battery pack. In particular, if a thermal event occurs in any one of the plurality of battery cells included in the battery pack, high-temperature venting gas and heat are generated.

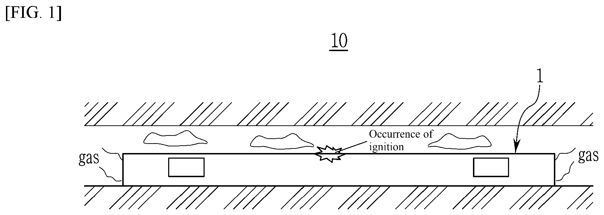

FIG. 1 is a cross-sectional view showing a conventional battery pack and chassis inside a vehicle device.

Referring to FIG. 1, when an ignition phenomenon occurs in at least one battery cell inside the battery pack 1, high-temperature gas may be discharged from the conventional battery pack 1. The high-temperature spark generated by the ignition inside the battery pack 1 heats the surface of the battery pack 1, which causes an increase in the surface temperature of the battery pack 1. An insulating coating may be formed on the surface of the battery pack 1, and when the surface temperature of the battery pack 1 exceeds the spontaneous ignition temperature of the insulating coating material, ignition may occur on the surface of the battery pack 1.

In this case, high-temperature gas may flow into the surface of a conventional battery pack 1 in the inside of a conventional chassis 10. At this time, a large flame may occur when the high-temperature gas encounters the ignition generated on the surface of the battery pack 1. Since such flames may flow back into the battery pack 1 and lead to an explosion of the battery pack 1 and the device including the same, there is a need for a method for preventing the occurrence of ignition on the surface of the battery pack.

### [DETAILED DESCRIPTION OF THE INVENTION]

### [Technical Problem]

It is an object of the present disclosure to provide a battery pack capable of preventing the occurrence of ignition on the surface even if an internal battery cell ignites, and a device including the same.

However, the technical objects to be solved by embodiments of the present disclosure are not limited to the above-described objects, and can be variously expanded within the scope of the technical idea included in the present disclosure.

### [Technical Solution]

According to certain aspects of the present disclosure, there is provided a battery pack comprising: a plurality of battery cells; a pack frame in which an upper part is opened, and the battery cells are mounted or the battery cells are mounted while being housed in a module frame; and a pack cover that covers the pack frame, wherein the pack cover includes a first plate and a second plate located on an upper part of the first plate, and wherein an insulating coating is formed on at least a part of a surface of the first plate.

The first plate and the second plate may include a metal material.

An insulating coating may not be formed on the surface of the second plate.

The second plate may include a metal material, and the metal material of the second plate may be exposed as it is.

When the internal pressure of the pack frame increases, the first plate is bent toward the direction where the second plate is located, and the first plate and the second plate may come into close contact with each other.

The second plate may have a larger elastic modulus than the first plate.

A venting part may be provided in the pack frame.

The second plate may be welded and joined to an exposed portion where an insulating coating is not formed among the surface of the first plate.

The first plate and the second plate may be coupled by a physical binding force.

The physical binding force may be a bolting fastening, a riveting fastening, or a fitting fastening.

A gasket may be interposed between the first plate and the second plate, or a sealant may be applied.

According to certain other aspects of the present disclosure, there is provided a device comprising the above-mentioned battery pack.

### [Advantageous Effects]

According to certain embodiments of the present disclosure, a pack cover including a first plate and a second plate is provided in a battery pack, thereby being able to prevent the occurrence of ignition on the surface of the pack cover even if the battery cells inside the battery pack ignite.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a cross-sectional view showing a conventional battery pack and chassis inside a vehicle device.
FIG. 2 is an exploded perspective view showing a battery pack according to an embodiment of the present disclosure.
FIG. 3 is a perspective view showing one of the battery cells included in the battery pack of FIG. 2.
FIG. 4 is a perspective view showing a pack cover included in the battery pack of FIG. 2.
FIG. 5 is an exploded perspective view showing the pack cover of FIG. 4.
FIGS. 6 and 7 are schematic diagrams showing a pack frame and a pack cover in a battery pack according to an embodiment of the present disclosure.
FIG. 8 is a partial cross-sectional view showing a cross section taken along the cutting line A-A' of FIG. 4.
FIGS. 9 to 11 are cross-sectional views showing cross sections of pack covers according to various embodiments of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

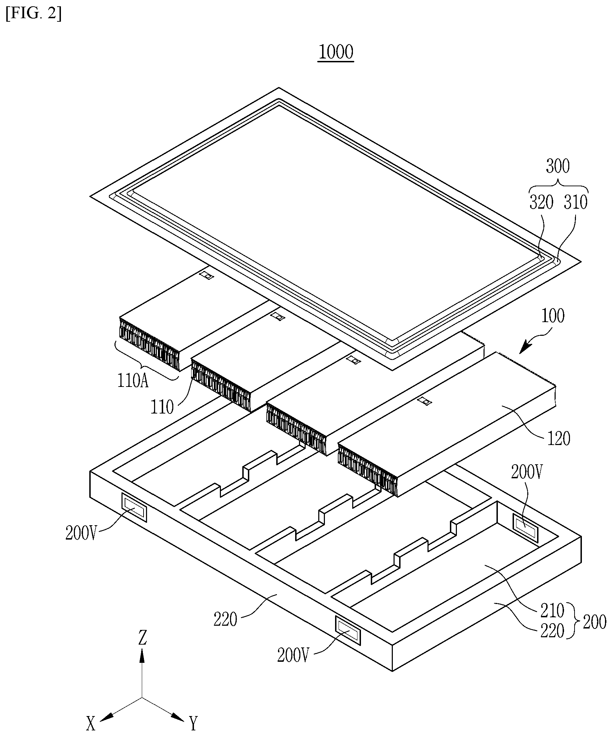

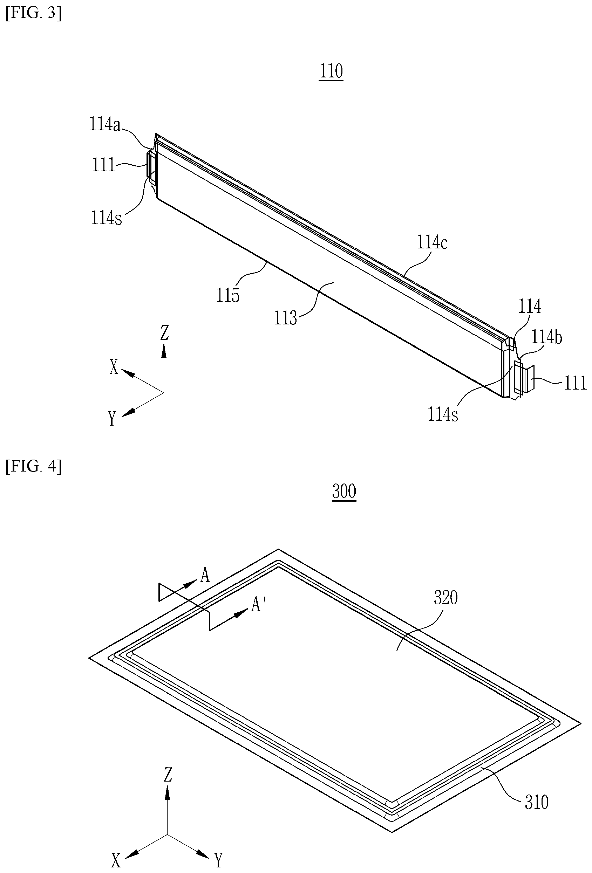

FIG. 2 is an exploded perspective view showing a battery pack according to an embodiment of the present disclosure. FIG. 3 is a perspective view showing one of the battery cells included in the battery pack of FIG. 2.

Referring to FIGS. 2 and 3, a battery pack 1000 according to certain embodiments of the present disclosure includes: a plurality of battery cells 110; a pack frame 200 in which an upper part is opened and the battery cells 110 are mounted or the battery cells 110 are mounted while being housed in a module frame 120; and a pack cover 300 that covers the pack frame 200.

The battery cell 110 according to the present embodiments may be various types of battery cells, for example, a pouch-type battery cell, a prismatic battery cell, or a cylindrical battery cell. In one embodiment, as shown in FIGS. 2 and 3, the battery cell 110 according to the present embodiments may be a pouch-type battery cell. Below, a pouch-type battery cell will be described, but the battery cell 110 according to the present embodiments is not limited thereto, and various types of battery cells may be applied thereto.

The battery cell 110 according to the present embodiments may have a structure in which an electrode assembly having electrode leads 111 protruding in one direction or both directions is housed in a pouch-type battery case 114. Such battery cells 110 may have a rectangular sheet shape. The battery cell 110 may be formed by housing an electrode assembly in a battery case 114 made of a laminate sheet including a resin layer and a metal layer, and then adhering the outer peripheral part of the battery case 114. In one embodiment, the battery cell 110 may have a structure in which two electrode leads 111 face each other and protrude from one end 114a and the other end 114b of the cell main body 113. In another embodiment, a structure in which all the electrode leads 111 of the battery cells 110 protrude in one direction is also possible. One of the electrode leads 111 is a positive electrode lead, and the other is a negative electrode lead.

The battery cell 110 can be produced by adhering both end parts 114a and 114b of a battery case 114 and one side part 114c connecting them in a state in which an electrode assembly (not shown) is housed in a battery case 114. In other words, the battery cell 110 according to certain embodiments of the present disclosure has a total of three sealing parts 114s, wherein the sealing parts 114s have a structure that is sealed by a method such as fusion, and the remaining other one side part may be composed of a folding part 115. That is, the battery cell 110 according to the present embodiments may be a pouch-type secondary battery in which the electrode assembly is housed inside the battery case 114 and the outer peripheral side of the battery case 114 is sealed to form a sealing part 114s. In FIG. 3, only a state in which the sealing parts 114s are formed at both end parts 114a and 114b of the battery case 114 are shown, and the sealing part is not shown on the side facing the folding part 115, however, the sealing part on the side facing the folding part 115 may be in a state being folded to one side after sealing is completed for space utilization.

The battery case 114 of the laminate sheet may include an inner resin layer for sealing, a metal layer for preventing penetration of materials, and an outer resin layer located on the outermost side. Based on the electrode assembly inside the battery case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can exhibit electrical insulation properties in order to protect the electrode assembly from the outside. Such an outer resin layer may include a polyethylene terephthalate(PET) resin or a nylon resin. The metal layer can prevent air, moisture, and the like from flowing into the pouch-type secondary battery. This metal layer may include aluminum(Al). The inner resin layers may be thermally fused to each other by heat and/or pressure applied in a state in which the electrode assembly is embedded. This inner resin layer may include casted polypropylene(CPP) or polypropylene(PP).

The battery case 114 is divided into two portions, and a concave-shaped housing part in which the electrode assembly can be seated may be formed in at least one of the two portions. Along the outer circumference of this housing part, the inner resin layers of the two portions of the battery case 114 may be joined to each other to provide a sealing part 114s. The battery case is sealed in this manner, so that the battery cell 110, which is a pouch-type secondary battery, can be produced.

The battery cells 110 may be configured in a plurality of numbers. In one embodiment, the plurality of battery cells 110 may be stacked along one direction so as to be electrically connected to each other, thereby forming a battery cell stack 110A. In one embodiment, the plurality of battery cells 110 may be stacked along a direction parallel to the Y-axis while standing upright.

In one embodiment, one surface of the battery cells 110 may be stacked from one side surface part 220 of the pack frame 200 to the other side surface part 220 in a state being perpendicular to the bottom part 210 of the pack frame 200 described below. Thereby, the electrode leads 111 may protrude in a direction perpendicular to the direction in which the battery cells 110 are stacked. In the battery cell 110, one electrode lead 111 may protrude toward the X-axis direction, and the other electrode lead 111 may protrude toward the -X-axis direction. If the electrode leads 111 are battery cells that protrude only in one direction, the electrode leads 111 may protrude in the X-axis direction or the -X-axis direction.

As described above, in one embodiment of the present disclosure, a plurality of battery cells 110 can be directly mounted on the pack frame 200. In this way, the structure in which a plurality of battery cells 110 are directly mounted on the pack frame 200 is a so-called cell-to-pack CTP structure, which is a configuration in which the battery cells 110 are not housed in a specific module frame 120, but are directly disposed on the pack frame 200 while having only the minimum number of fixing structure.

Meanwhile, in certain other embodiments of the present disclosure, a plurality of battery cells 110 may be mounted on a pack frame 200 while being housed in a module frame 120. This embodiment is illustrated in FIG. 2. Specifically, a plurality of battery cells 110 may be stacked along one direction to form a battery cell stack 110A, and the battery cell stack 110A may be housed in the module frame 120 to form a battery module 100. The battery cells 110 may be housed in the pack frame 200 in units of such battery modules 100.

The pack frame 200 according to the present embodiments may have a space for housing battery cells 110 or battery modules 100 therein, and may have opened upper part. Specifically, the pack frame 200 may include: a bottom part 210 on which battery cells 110 are directly placed or battery cells 110 are placed in the form of a battery module 100; and side surface parts 220 extending along the edge of the bottom part 210. This side surface part 220 may extend in a direction perpendicular to one surface of the bottom part 210. Further, the side surface part 220 may extend along the edge of the bottom part 210. An internal space having opened upper part is provided by the bottom part 210 and the side surface part 220, and the battery cells 110 or battery modules 100 can be housed in this internal space. The pack cover 300 according to the present embodiments can cover the opened upper part of the pack frame 200 and can be coupled with the side surface part 220 of the pack frame 200.

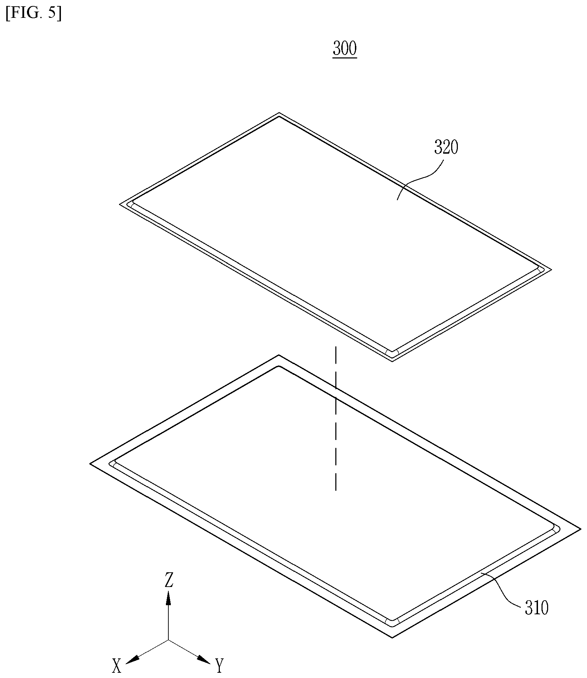

FIG. 4 is a perspective view showing a pack cover included in the battery pack of FIG. 2. FIG. 5 is an exploded perspective view showing the pack cover of FIG. 4.

Referring to FIGS. 2, 4 and 5 together, the pack cover 300 according to the present embodiments includes a first plate 310 and a second plate 320 located on the upper part of the first plate 310. That is, the first plate 310 can directly cover the opened upper part of the pack frame 200, and the second plate 320 can be located on the upper part of the first plate 310.

Meanwhile, an insulating coating is formed on at least a part of the surface of the first plate 310. The insulating coating is a coating layer including an electrically insulating material, and the electrically insulating material is not particularly limited. Further, the method of forming an insulating coating on the surface of the first plate 310 is not particularly limited.

The first plate 310 and the second plate 320 according to the present embodiments may include a metal material. In addition, the pack frame 200 may also include a metal material. The first plate 310, the second plate 320, and the pack frame 200 include a metal material, thereby being able to reduce the weight of the battery pack 1000 while ensuring the rigidity of the battery pack 1000. In one embodiment, the first plate 310, the second plate 320, and the pack frame 200 may include an aluminum material.

However, since the first plate 310 is configured to directly face the battery cells 110 or the battery module 100, it may come into contact with the electrical connection path of the battery cells 110 to cause a short circuit. Such a short circuit may cause ignition and explosion of the battery pack 1000. Therefore, in order to prevent the occurrence of a short circuit, an insulating coating is formed on at least a part of the surface of the first plate 310. In addition, since the insulating coating is formed on at least a part of the surface of the first plate 310 including a metal material, the first plate 310 can be prevented from corroding.

However, as described above, under a situation where the battery cells 110 ignite, the insulating coating formed on the surface of the first plate 310 may be the cause of ignition. Specifically, the high-temperature spark generated due to the ignition of the battery cells 110 may heat the first plate 310 of the pack cover 300, and the surface temperature of the first plate 310 may increase. At this time, if the insulating material included in the insulating coating formed on the surface of the first plate 310 exceeds a spontaneous ignition temperature, ignition may occur on the surface of the first plate 310. If the high-temperature venting gas discharged from the battery pack 1000 encounters the ignition generated on the surface of the first plate 310, a large flame may occur, and such a flame may flow back into the inside of the battery pack 1000, which may lead to an explosion of the battery pack 1000 and the device including the same.

In order to prevent ignition on the surface of the pack cover 300 as described above, the pack cover 300 according to the present embodiments further includes a second plate 320 that covers the first plate 310 on the upper part of the first plate 310. That is, the pack cover 300 according to the present embodiments may have a double structure of the first plate 310 and the second plate 320.

Specifically, three elements are required for ignition: "combustible material," "temperature above the ignition point," and "oxygen". In the battery pack 1000, the combustible material among the three elements may correspond to the insulating coating formed on the surface of the first plate 310, and the temperature above the ignition point among the three elements may be satisfied by an increase in the surface temperature of the first plate 310 due to the ignition of the battery cells 110. In such a situation, if oxygen is blocked, the elements for ignition are not satisfied, and thus ignition does not occur. Thus, in the battery pack 1000 according to the present embodiments, the second plate 320 is disposed on an upper part of the first plate 310, thereby reducing the amount of oxygen on the surface of the first plate 310 and blocking oxygen among the three elements for ignition.

Since the upper surface of the first plate 310 is configured to be covered by the second plate 320, and only a predetermined space or gap exists between the first plate 310 and the second plate 320, the amount of oxygen on the upper surface of the first plate 310 is reduced as compared to when the upper surface of the first plate 310 is exposed to the atmosphere. That is, since the amount of oxygen is not sufficient to cause ignition, the occurrence of ignition on the surface of the first plate 310 is blocked. Further, even if a micro flame occurs on the upper surface of the first plate 310, it is possible to block the venting gas from coming into contact with the micro flame by the second plate 320.

In one embodiment, the first plate 310 and the second plate 320 may be plate-shaped members that are indented in an upward direction. Thereby, a predetermined space or gap may be provided between the first plate 310 and the second plate 320. The temperature of the first plate 310 increases significantly due to the influence of high-temperature venting gas and sparks when the battery cells 110 are ignited. However, since the second plate 320 is spaced apart from the first plate 310 so as to have a predetermined space, it is possible to prevent the generation of direct heat conduction from the first plate 310 to the second plate 320.

Meanwhile, it is preferable that an insulating coating is not formed on the surface of the second plate 320 according to the present embodiments. That is, as described above, the second plate 320 may include a metal material, and the metal material of the second plate 320 may be exposed as it is. Since the second plate 320 does not require an insulating coating because it is not configured to directly face the battery cells 110 or the battery module 100. If an insulating coating is formed on the surface of the second plate 320, the insulating material included in the insulating coating may become a combustible material, and thus it is not possible to properly block the occurrence of ignition in the pack cover 300.

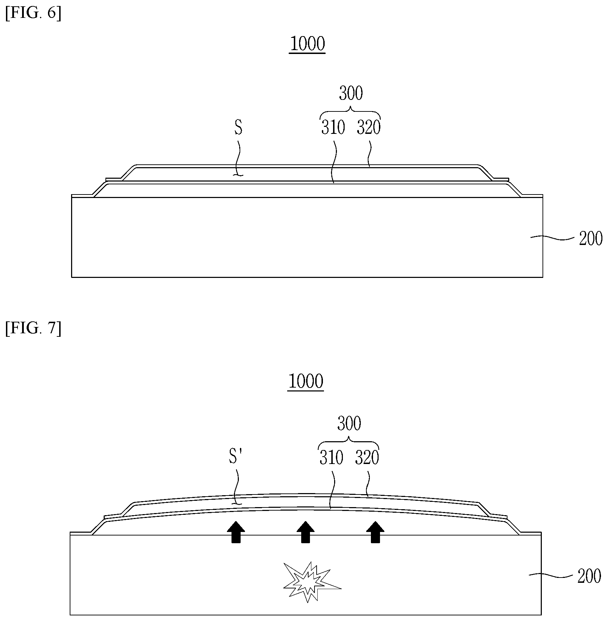

Below, blocking the occurrence of ignition in the pack cover 300 of the battery pack 1000 according to the present embodiments will be described in detail with reference to FIGS. 6 and 7.

FIGS. 6 and 7 are schematic diagrams showing a pack frame and a pack cover in a battery pack according to an embodiment of the present disclosure. In particular, FIGS. 6 and 7 show cross-sections of the pack frame 200 and pack cover 300 that are coupled with each other, but the battery cells inside the pack frame 200 are omitted. Furthermore, FIG. 6 shows the state before ignition occurs inside the battery pack, and FIG. 7 shows the state after ignition occurs inside the battery pack.

Referring to FIGS. 2 and 4 to 7 together, the pack cover 300 including the first plate 310 and the second plate 320 covers the opened upper part of the pack frame 200 as described above. FIG. 6 shows the state before a thermal event occurs inside the battery pack 1000.

At this time, if a thermal event occurs in the battery cells 110 inside the pack frame 200, ignition may occur inside the pack frame 200 along with high-temperature venting gas and sparks. As shown in FIG. 7, due to the venting gas generated inside the pack frame 200, the pressure inside the battery pack 1000 increases, and the first plate 310 and the second plate 320 of the pack cover 300 may be bent in an upward direction.

The venting gas can be discharged to the outside through the venting part 200V (see FIG. 2) provided in the pack frame 200. In one embodiment, the venting part 200V may be formed on the side surface part 220 of the pack frame 200. In the present disclosure, the venting part 200V collectively refers to a mechanism for discharging high-temperature venting gas and heat generated inside the battery pack 1000 to the outside of the battery pack 1000. That is, as long as it is possible to discharge high-temperature venting gas and heat generated inside the battery pack 1000 due to a thermal event, the structure or shape of the venting part 200V is not particularly limited. In one embodiment, the venting part 200V may be a structure that is ruptured when the internal pressure of the battery pack 1000 is above a certain level or a valve-shaped structure that is opened. In FIG. 2, three venting parts 200V formed on the side surface part 220 are shown in schematic form.

The upper surface of the first plate 310 is configured to be covered by the second plate 320, and when a thermal event occurs in the battery cells 110 inside the pack frame 200, only a predetermined space S' exists between the first plate 310 and the second plate 320. Consequently, the amount of oxygen is not sufficient, so that ignition does not occur in the pack cover 300. Therefore, even if the high-temperature venting gas is discharged to the outside of the battery pack 1000 through the venting part 200V, it is possible to prevent the high-temperature venting gas from leading to a large explosion due to ignition.

More specifically, as shown in FIG. 6, before a thermal event occurs inside the battery pack 1000, a predetermined space S is maintained between the first plate 310 and the second plate 320. When a thermal event occurs in the battery cells 110 inside the pack frame 200, the internal pressure of the pack frame 200 increases due to the venting gas generated inside the pack frame 200 as shown in FIG. 7. When the internal pressure of the pack frame 200 increases, the first plate 310 is bent toward the direction where the second plate 320 is located, so that the first plate 310 and the second plate 320 can be in close contact with each other. That is, while the first plate 310 is bent further, the space S' between the first plate 310 and the second plate 320 becomes narrower than the space S shown in FIG. 6. Both the first plate 310 and the second plate 320 can be bent in an upward direction, but since the first plate 310 directly receives pressure from the inside of the pack frame 200, the first plate 310 can be more bent in an upward direction than the second plate 320. This phenomenon may be the same even if the first plate 310 and the second plate 320 include the same metal material. This is because the first plate 310 directly receives pressure due to the venting gas.

As the space S' between the first plate 310 and the second plate 320 becomes narrower, the amount of oxygen between the first plate 310 and the second plate 320, i.e., the amount of oxygen on the upper surface of the first plate 310, is decreased, and the possibility of ignition is significantly reduced.

Further, due to a small amount of residual oxygen, a micro flame may occur between the first plate 310 and the second plate 320, but since the first plate 310 and the second plate 320 are in close contact with each other, it is difficult for high-temperature venting gas to flow in between them. That is, even if a micro flame occurs, the second plate 320 can block the micro flame from coming into contact with the venting gas discharged from the battery pack 1000.

Meanwhile, according to certain other embodiments of the present disclosure, the second plate 320 may have a larger elastic modulus than the first plate 310. As described previously, even if the first plate 310 and the second plate 320 include the same material, the first plate 310 directly receives pressure by the venting gas and thus, the first plate 310 may be sufficiently adhered to the second plate 320. However, in certain other embodiments of the present disclosure, in order to more clearly achieve the effect of the first plate 310 being adhered to the second plate 320, the second plate 320 may be set to have a larger elastic modulus than the first plate 310.

The first plate 310 and the second plate 320 may include a metal material, wherein the second plate 320 may include a material having a higher elastic modulus than the first plate 310. A tensile strength test may be performed on an elastic body including a metal material, such as the first plate 310 or the second plate 320. A stress is applied to the elastic body and the strain, which is the degree of deformation resulting therefrom, is measured. The elastic body may pass an elastic region where it can be restored, and reach a plastic region where it cannot be restored. At this time, the ratio of the stress value to the strain value, which is the slope in the elastic region, corresponds to the elastic modulus. In other words, the elastic modulus indicates the degree of stress relative to the strain in the elastic region in a tensile strength test, etc. That is, the second plate 320 including a material with a higher elastic modulus has more rigidity than the first plate 310, so that when the same stress is applied, the second plate 320 undergoes less deformation and the first plate 310 undergoes more deformation.

If the second plate 320 has a larger elastic modulus than the first plate 310, the range of the elastic modulus of each of the first plate 310 and the second plate 320 is not particularly limited. The range of the elastic modulus of each of the first plate 310 and the second plate 320 may vary depending on the capacity, shape, size, etc. of the battery pack 1000.

The second plate 320 includes a material having a larger elastic modulus than the first plate 310, and therefore, when a similar stress is applied, the first plate 310 is largely deformed, and the second plate 320 may be deformed smaller than the first plate 310. Therefore, when the internal pressure of the pack frame 200 increases, the first plate 310 can be further adhered toward the second plate 320, and the space S' between the first plate 310 and the second plate 320 may be further reduced. This can be more effective in preventing the occurrence of ignition in the pack cover 300.

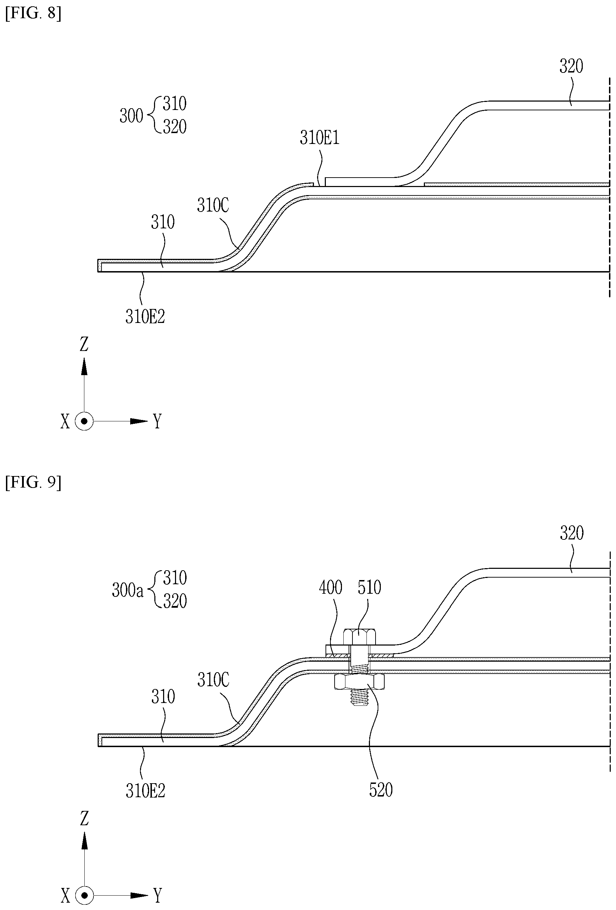

FIG. 8 is a partial cross-sectional view showing a cross section taken along the cutting line A-A' of FIG. 4.

Referring to FIGS. 4, 5 and 8, in the pack cover 300 according to certain embodiments of the present disclosure, the first plate 310 and the second plate 320 can be welded and joined to each other. Specifically, the second plate 320 can be welded and joined to the exposed part 310E1 on the surface of the first plate 310 where the insulating coating 310C is not formed. Hereinafter, the surface of the first plate 310 to which the second plate 320 is joined is referred to as the first exposed part 310E1.

As described above, an insulating coating 310C is formed on at least a part of the surface of the first plate 310. At this time, without subjecting the insulating coating 310C to the entire surface of the first plate 310, masking may be performed on a partial region of the first plate 310 to provide a first exposed part 310E1 not subjected to the insulating coating 310C. The edge area of the second plate 320 may be welded and joined to the first exposed part 310E1 of the first plate 310. The welding method is not particularly limited, and resistance welding, laser welding or the like may be performed.

Meanwhile, in FIG. 8, it is shown as making the first exposed part 310E1 visible for convenience of explanation, but after welding and joining between the first plate 310 and the second plate 320, an additional insulation coating may be applied to cover the exposed portion of the first plate 310, thereby completely covering the first exposed part 310E1.

An additional second exposed part 310E2 may also be provided at the edge of the lower surface of the first plate 310. While the second exposed part 310E2 of the first plate 310 is being welded and joined to the side surface part 220 of the pack frame 200, the first plate 310 may be coupled with the pack frame 200. That is, welding may also be applied to the joining between the pack cover 300 and the pack frame 200.

Next, a method of coupling the first plate and the second plate according to certain other embodiments of the present disclosure will be described.

FIGS. 9 to 11 are cross-sectional views showing cross sections of pack covers according to various embodiments of the present disclosure.

Referring to FIGS. 9 to 11, in the pack covers 300a, 300b and 300c according to other embodiments of the present disclosure, the first plate 310 and the second plate 320 can be joined by physical binding force. That is, the first plate 310 and the second plate 320 can be coupled by using a physical binding force, rather than the welding method described in FIG. 8. If a physical binding force is used rather than the welding method, the sealing performance between the first plate 310 and the second plate 320 may be deteriorated. Therefore, in order to increase the sealing performance, a gasket may be interposed between the first plate 310 and the second plate 320 or a sealant may be applied. FIGS. 9 to 11 show that a gasket 400 is interposed between the first plate 310 and the second plate 320 at a portion where the first plate 310 and the second plate 320 are joined.

The physical binding force between the first plate 310 and the second plate 320 may be a bolting fastening, a riveting fastening, or a fitting fastening.

First, referring to FIG. 9, the first plate 310 and the second plate 320 of the pack cover 300a can be coupled through bolting. Specifically, the bolt 510 can pass through a hole formed in each of the first plate 310 and the second plate 320 and be fastened to a nut 520. At this time, a gasket 400 may be interposed between the first plate 310 and the second plate 320, and the bolt 510 may pass through the hole of the gasket 400 and be fastened to the nut 520.

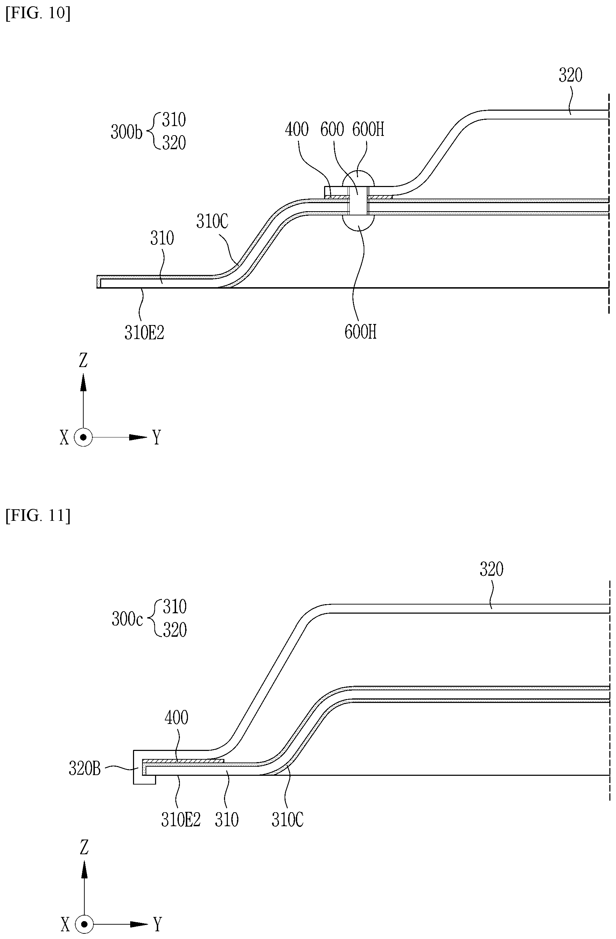

Next, referring to FIG. 10, the first plate 310 and the second plate 320 of the pack cover 300b can be coupled through rivet fastening. Specifically, a rivet pin 600 having a rivet head 600H formed only at one end is passed through a hole formed in each of the first plate 310 and the second plate 320. The other end of the rivet pin 600 is then deformed to form another rivet head 600H. The first plate 310 and the second plate 320 may be fixed between the two rivet heads 600H. At this time, a gasket 400 may be interposed between the first plate 310 and the second plate 320, and the rivet pin 600 may pass through the hole of the gasket 400.

Next, referring to FIG. 11, the first plate 310 and the second plate 320 of the pack cover 300c may be coupled through a fitting fastening. Specifically, a bending part 320B can be provided at the edge of the second plate 320, and while the bending part 320B of the second plate 320 is being fitted into the edge of the first plate 310, the first plate 310 and the second plate 320 can be coupled with each other. However, this fitting fastening is an example, and the fitting method between the first plate 310 and the second plate 320 is not particularly limited. Meanwhile, a gasket 400 may be similarly interposed between the first plate 310 and the second plate 320.

In the embodiments above, expressions indicating directions such as "front," "rear," "left," "right," "up," and "down" have been used. These expressions are used only to facilitate the description, and may vary, for example, depending on the location of a target object or an observer.

The battery cells or battery modules according to the present embodiments described above may be mounted together with various control and protection systems such as a battery management system (BMS), a battery disconnect unit (BDU), and a cooling system, to form a battery pack.

The battery pack may be applied to various devices, which include, for example, transportation vehicles such as electric bicycles, electric vehicles, and hybrids, and energy storage systems (ESS). However, without being limited thereto, the battery pack may be applied to various devices using secondary batteries.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery module
110: battery cell
110A: battery cell stack
120: module frame
200: pack frame
210: bottom part
220: side surface part
300: pack cover
310: first plate
310C: insulating coating
320: second plate

## Claims

1. A battery pack comprising:
a plurality of battery cells;
a pack frame in which an upper part is opened, and the battery cells are mounted or the battery cells are mounted while being housed in a module frame; and
a pack cover that covers the pack frame,
wherein the pack cover includes a first plate and a second plate located on an upper part of the first plate, and
wherein an insulating coating is formed on at least a part of a surface of the first plate.

2. The battery pack according to claim 1,
wherein the first plate and the second plate include a metal material.

3. The battery pack according to claim 1,
wherein an insulating coating is not formed on the surface of the second plate.

4. The battery pack according to claim 1,
wherein the second plate includes a metal material, and
the metal material of the second plate is exposed as it is.

5. The battery pack according to claim 1,
wherein when the internal pressure of the pack frame increases, the first plate is bent toward the direction where the second plate is located, and the first plate and the second plate come into close contact with each other.

6. The battery pack according to claim 1,
wherein the second plate has a larger elastic modulus than the first plate.

7. The battery pack according to claim 1,
wherein a venting part is provided in the pack frame.

8. The battery pack according to claim 1,
wherein the second plate is welded and joined to an exposed portion where an insulating coating is not formed among the surface of the first plate.

9. The battery pack according to claim 1,
wherein the first plate and the second plate are coupled by a physical binding force.

10. The battery pack according to claim 9,
wherein the physical binding force is a bolting fastening, a riveting fastening, or a fitting fastening.

11. The battery pack according to claim 9,
wherein a gasket is interposed between the first plate and the second plate, or a sealant is applied.

12. A device comprising a battery pack according to claim 1.
